# EUROPEAN PATENT SPECIFICATION

(11) **EP 1 312 816 B1**
(45) Date of publication and mention of the grant of the patent: **18.07.2007**
(21) Application number: 02257866.0
(22) Date of filing: 14.11.2002
(51) Int. Cl.: F16C 33/04

(54) **Composite bushing with a monolithic ceramic core**
Buchsenanordnung mit einem monolithischen, keramischen Kern
Manchon muni d'un noyau de céramique monolithique

(30) Priority: 14.11.2001 US 683063
(43) Date of publication of application: 21.05.2003
(73) Proprietor: GENERAL ELECTRIC COMPANY, Schenectady, NY 12345 (US)
(72) Inventor: Schroder, Mark Stewart, Hendersonville, North Carolina 28739 (US); Good, Randall Richard, Simpsonville, South Carolina 29680 (US); Dimascio, Paul Stephen, Greer, South Carolina 29650 (US)
(74) Representative: Pedder, James Cuthbert

(56) References cited:
- EP-A- 0 477 755
- DE-C- 19 712 287
- US-A- 5 211 999
- US-B1- 6 451 416

## Description

This invention relates to ceramic matrix composite components in general, and specifically, to a high temperature ceramic matrix composite bushing designed for attachment to lower temperature metallic gas turbine components.

Ceramic matrix composites offer high material temperature capability. In the gas turbine field, however, they often require attachment to lower temperature metallic gas turbine components. Problems associated with the attachment of known silicon carbide ceramic matrix composites (CMC's) to metallic components include wear, oxidation (due to ionic transfer with metal), stress concentration (from clamping loads), transition to thick section fabrication, and fiber damage in creating holes in the CMC's.

EP-A-0 477 755 discloses a bearing. A bearing assembly, comprises a ceramic outer ring formed from a ceramic monolith member attached to a fibre-reinforced member and a ceramic inner ring formed from a ceramic monolith member attached to a fibre reinforced member. Within the cavity formed by the inner and outer rings is positioned a ceramic ball rolling element which is retained in position by a retainer. Normally a plurality of balls are used in a single assembly. The ceramic balls freely rotate in the cavity. The inner and outer rings are free to rotate with respect to one another.

Aspects of the present invention are defined in the accompanying claims.

In an exemplary embodiment of the invention, advantage is taken of the very high strength of monolithic ceramics to absorb the clamping loads of bolt and pin-type attachment means. The bushing thus has an inner core made of either silicon carbide or silicon nitride monolithic ceramic that is embedded within an outer housing made of CMC material that is molded about the inner core. It is understood that material selection for the inner core depends on specific attachment requirements, and the shape of the inner core of the bushing could be any number of shapes, two of which are disclosed herein.

Preferably, the shape of the inner core would thus be optimized to insure that the inner core is well encased within the CMC component, and that the load is optimally distributed into the CMC structure. In the exemplary embodiment, the required size of the hole in the inner core of the bushing will contribute to set the overall size of the bushing in order to preserve an appropriate surface area of monolithic ceramic within the CMC component.

Accordingly, in its broader aspects, embodiments of the present invention relate to a bushing comprising an inner core comprised of a monolithic ceramic material having a through-hole formed therein of predetermined diameter; and an outer housing substantially encasing the inner core, the outer housing comprising a ceramic composite matrix material.

In another aspect, the invention relates to a bushing comprised of silicon nitride or silicon carbide, the inner core having a first outer diameter and a through-hole formed therein having a second diameter, the first diameter being 2.5 - 4 times the second diameter; an outer housing substantially enclosing the inner core, the outer housing comprised of a ceramic matrix composite material.

In still another aspect, the invention relates to a method of making a bushing for use in gas turbine constructions comprising a) forming an inner core of silicon nitride or silicon carbide having a through-hole of predetermined diameter; and b) applying a ceramic matrix composite material over substantially all of the inner core.

The invention will now be described in greater detail, by way of example, with reference to the drawings, in which:-
FIGURE 1 is a side elevation of a bushing having a monolithic ceramic core encased within a ceramic matrix composite material in accordance with an exemplary embodiment of the invention;
FIGURE 2 is a side view of the bushing shown in Figure 1; and
FIGURE 3 is a side view of a bushing in accordance with an alternative embodiment of the invention.

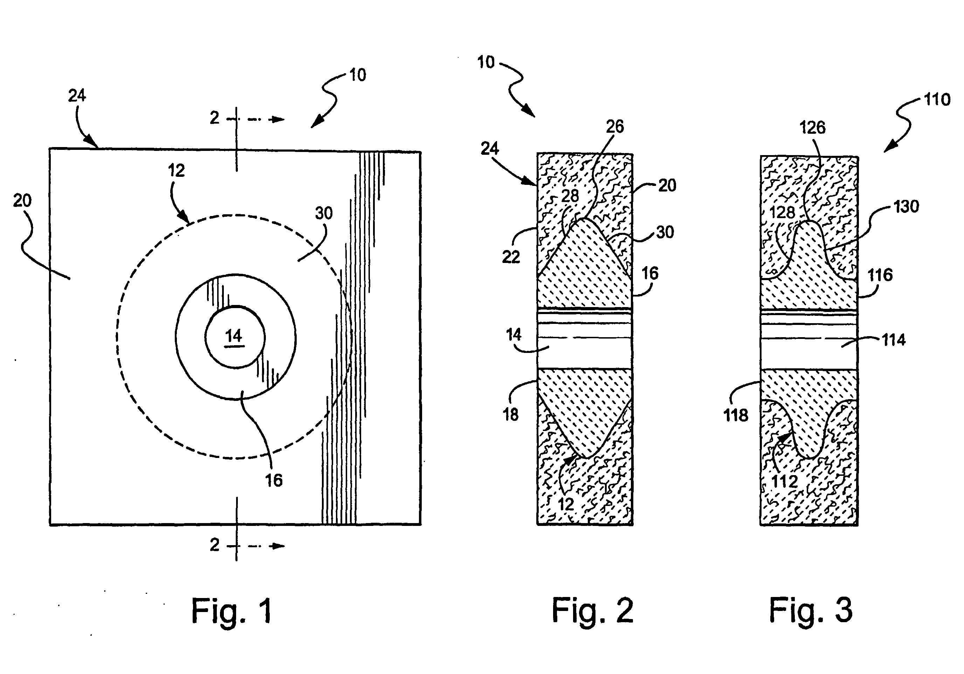

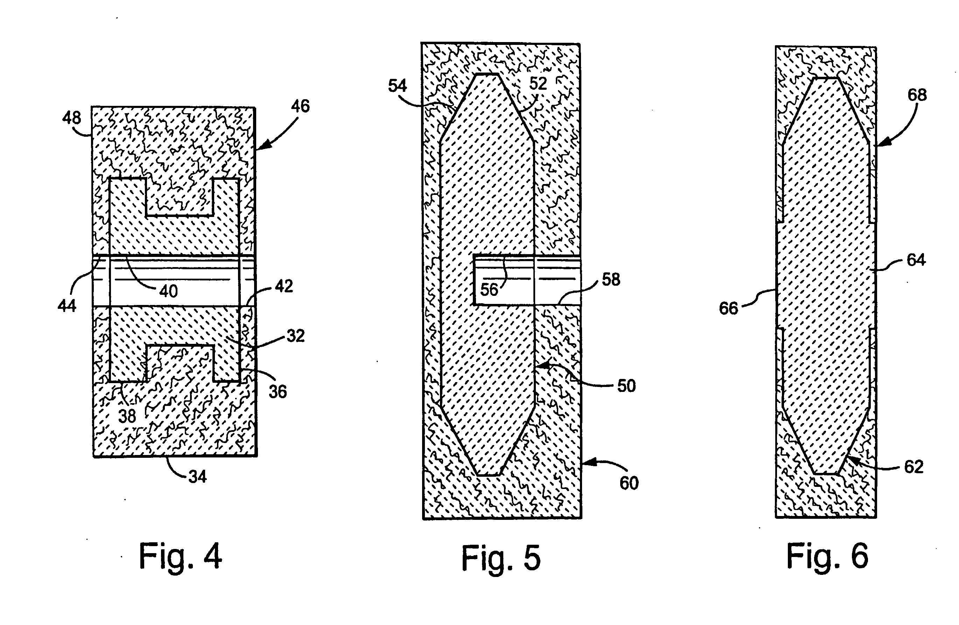

With reference to Figures 1 and 2, the bushing 10 includes a monolithic ceramic inner core 12 made of either silicon nitride or silicon carbide. These materials bond well with the surrounding ceramic matrix composite matrix (CMC), while providing extremely hard and wear resistant surfaces.

Monolithic ceramics also can maintain close tolerances needed for specific attachment requirements. The inner core 12 includes a through-hole 14 that is sized to receive a metallic gas turbine component such as a bolt shank or pin. The inner core 12 also includes flat, annular portions or faces 16, 18 that are flush with the opposite sides 20, 22 of the partially surrounding outer housing 24.

The inner core 12 is reduced in thickness in a radially outward direction in symmetrical fashion from the flat annular faces 16, 18 to an internal, maximum diameter curved edge 26 via substantially flat tapered surfaces 28, 30. Edge 26 is substantially centered between the sides 20, 22 of the CMC housing 24.

In an alternative embodiment shown in Figure 3, where similar reference numerals for corresponding elements are used, but with the prefix "1" added, the inner core 112 reduces in thickness in a radially outward direction from the flat annular faces 116, 118 to an internal, maximum diameter convex curved edge 126 via concave curved surfaces 128, 130.

In both cases, the manufacture of the bushing 10 is similar. Thus, after producing the silicon nitride or silicon carbide monolithic inner core 12, the CMC material is molded over the inner core 12. The manner in which this is done may be similar to the way in which components are embedded in fiberglass, with layer upon layer of the CMC laid up on the monolithic inner core in sections or strips, until the outer dimensions of the composite bushing are achieved.

The arrangement described above is intended to take advantage of the very high strength of monolithic ceramics to absorb the clamping loads of bolt and pin type attachments. The inner core 12 allows the stress field around attachment points to be spread out over a larger area supported by the surrounding fibers within the larger area CMC outer housing 24.

Material selection will depend on specific applications, and the shape of the inner core 12 of the bushing may be varied to provide optimum load distribution into the surrounding CMC outer housing 24. In addition, the diameter of the hole 14 determines in part the size of the bushing in order to preserve an approximate surface area of the monolithic inner core within the CMC outer housing. Preferably, a ratio of overall monolithic inner core diameter to hole diameter of 2.5 - 4 is maintained, the exact ratio being determined by specific application requirements.

## Claims

1. A bushing (10) comprising:
an inner core (12) comprised of a monolithic ceramic material having a through-hole (14) formed therein of predetermined diameter; and
an outer housing (24) substantially encasing said inner core, said outer housing comprising a ceramic composite matrix material;
wherein said inner core (12) has front and rear faces (16, 18) about said through-hole (14) that are flush with opposite sides (20, 22) of said outer housing wherein said inner core (12) further includes surfaces (28, 30) that taper inwardly from said front and rear face portions to a curved, radially outer edge (26) centered relative to said opposite sides (20, 22) of said outer housing (24).

2. The bushing of claim 1 wherein said monolithic ceramic material comprises silicon nitride.

3. The bushing of claim 1 wherein said monolithic ceramic material comprises silicon carbide.

4. The bushing of any one of the preceding claims, wherein said surfaces (28, 30) are substantially flat.

5. The bushing of any one of the preceding claims, wherein said surfaces (128, 130) are concave.

6. The bushing of any preceding claim wherein said outer housing (24) is molded around said inner core (12).

7. The bushing of any preceding claim wherein said through hole (14) in said inner core (12) is recessed relative to opposite sides of the outer housing (24).

8. A method of making a bushing (10) for use in gas turbine constructions comprising:
a) forming an inner core (12) of silicon nitride or silicon carbide having a through-hole (14) of a predetermined diameter; and
b) applying a ceramic matrix composite material over substantially all of said inner core,
wherein said inner core (12) has front and rear faces (16, 18) about said through-hole (14) that are flush with opposite sides (20, 22) of said outer housing wherein said inner core (12) further includes surfaces (28, 30) that taper inwardly from said front and rear face portions to a curved, radially outer edge (26) centered relative to said opposite sides (20, 22) of said outer housing (24).

9. The method of claim 8 wherein, during step a), said inner core (12) is formed to have an outer diameter 2.5 - 4 times larger than said hole diameter.

## Patentansprüche

1. Buchsenlager (10), umfassend:
einen inneren Kern (12) aus einem monolithischen keramischen Material mit einem darin gebildeten Durchgangsloch (14) mit vorgegebenem Durchmesser, und
ein Außengehäuse (24), das den inneren Kern im Wesentlichen umgibt, wobei das Außengehäuse aus einem keramischen Matrixverbundmaterial besteht;
**dadurch gekennzeichnet, dass** der innere Kern (12) um das Durchgangsloch (14) eine Vorder- und eine Rückfläche (16, 18) aufweist, die mit den gegenüberliegenden Seitenflächen (20, 20) des Außengehäuses bündig abschließen, wobei der innere Kern (12) ferner Flächen (28, 30) aufweist, die sich von dem Vorder- und Rückflächenabschnitt nach innen zu einer gebogenen, radialen Außenkante (26) verjüngen, die bezüglich der gegenüberliegenden Seitenflächen (20, 22) des Außengehäuses (24) zentriert ist.

2. Buchsenlager nach Anspruch 1, **dadurch gekennzeichnet, dass** das monolithische keramische Material Siliziumnitrid ist.

3. Buchsenlager nach Anspruch 1, **dadurch gekennzeichnet, dass** das monolithische Keramikmaterial Siliziumcarbid ist.

4. Buchsenlager nach einem der vorhergehenden Ansprüche, **dadurch gekennzeichnet, dass** die Flächen (28, 30) im Wesentlichen eben sind.

5. Buchsenlager nach einem der vorhergehenden Ansprüche, **dadurch gekennzeichnet, dass** die Flächen (128, 130) im Wesentlichen konkav gewölbt sind.

6. Buchsenlager nach einem der vorhergehenden Ansprüche, **dadurch gekennzeichnet, dass** das Außengehäuse (24) um den inneren Kern (12) herum gebildet ist.

7. Buchsenlager nach einem der vorhergehenden Ansprüche, **dadurch gekennzeichnet, dass** das Durchgangsloch (14) in dem inneren Kern (12) hinsichtlich der gegenüberliegenden Seiten des Außengehäuses (24) ausgespart ist.

8. Verfahren zur Herstellung eines Buchsenlagers (10) zur Anwendung in Gasturbinenkonstruktionen, umfassend:
a) das Bilden eines inneren Kerns (12) aus Siliziumnitrid oder Siliziumkarbid mit einem Durchgangsloch (14) mit vorgegebenem Durchmesser; und
b) das Aufbringen eines keramischen Matrixverbundmaterials im Wesentlichen auf den gesamten inneren Kern,
**dadurch gekennzeichnet, dass** der innere Kern (12) um das Durchgangsloch (14) eine Vorder- und eine Rückfläche (16, 18) aufweist, die mit den gegenüberliegenden Seitenflächen (20, 20) des Außengehäuses bündig abschließen, wobei der innere Kern (12) ferner Flächen (28, 30) aufweist, die sich von dem Vorder- und Rückflächenabschnitt nach innen zu einer gebogenen, radialen Außenkante (26) verjüngen, die bezüglich der gegenüberliegenden Seitenflächen (20, 22) des Außengehäuses (24) zentriert ist.

9. Verfahren nach Anspruch 8, **dadurch gekennzeichnet, dass** im Schritt a) der innere Kern (12) so gebildet wird, dass sein Außendurchmesser 2,5 - 4 Mal größer ist als der Lochdurchmesser.

## Revendications

1. Bague (10) comprenant:
un noyau interne (12) constitué par un matériau céramique monolithique comportant un orifice traversant (14) formé à l'intérieur d'un diamètre prédéterminé ; et
un logement externe (24) enveloppant sensiblement ledit noyau interne, ledit logement externe comprenant un matériau composite à matrice céramique ;
dans lequel ledit noyau interne (12) présente des faces avant et arrière (16, 18) autour dudit orifice traversant (14) qui sont au ras des côtés opposés (20, 22) dudit logement externe dans lequel ledit noyau interne (12) comporte, en outre, des surfaces (28, 30) qui sont évasées vers l'intérieur à partir desdites parties de face avant et arrière vers une arête incurvée radialement à l'extérieur (26) centrée par rapport auxdits côtés opposés (20, 22) dudit logement externe (24).

2. Bague selon la revendication 1, dans laquelle ledit matériau céramique monolithique comprend du nitrure de silicium.

3. Bague selon la revendication 1, dans laquelle ledit matériau céramique monolithique comprend du carbure de silicium.

4. Bague selon l'une quelconque des revendications précédentes, dans laquelle lesdites surfaces (28, 30) sont sensiblement plates.

5. Bague selon l'une quelconque des revendications précédentes, dans laquelle lesdites surfaces (128, 130) sont concaves.

6. Bague selon l'une quelconque des revendications précédentes, dans laquelle ledit logement externe (24) est moulé autour dudit noyau interne (12).

7. Bague selon l'une quelconque des revendications précédentes, dans laquelle ledit orifice traversant (14) sur ledit noyau interne (12) est creusé par rapport aux côtés opposés du logement externe (24).

8. Procédé de réalisation d'une bague (10) destinée à être utilisée dans des constructions de turbine à gaz comprenant :
a) la formation d'un noyau interne (12) de nitrure de silicium ou de carbure de silicium présentant un orifice traversant (14) d'un diamètre prédéterminé ; et
b) l'application d'un matériau composite à matrice céramique sensiblement sur la totalité dudit noyau interne,
dans lequel ledit noyau interne (12) présente des faces avant et arrière (16, 18) autour dudit orifice traversant (14) qui sont au ras des côtés opposés (20, 22) dudit logement externe, dans lequel ledit noyau interne (12) comporte, en outre, des surfaces (28, 30) qui sont évasées vers l'intérieur à partir desdites parties de face avant et arrière vers une arête incurvée radialement à l'extérieur (26) centrée par rapport auxdits côtés opposés (20, 22) dudit logement externe (24).

9. Procédé selon la revendication 8, dans lequel, au cours de l'étape a), ledit noyau interne (12) est formé de manière à présenter un diamètre externe de 2,5 à 4 fois plus grand que ledit diamètre d'orifice.
